# FASCICULE DE BREVET EUROPEEN

(11) **EP 2 203 318 B1**
(45) Date de publication et mention de la délivrance du brevet: **29.06.2011**
(21) Numéro de dépôt: 08804883.0
(22) Date de dépôt: 29.09.2008
(51) Int. Cl.: B60C 11/12

(54) **BANDE DE ROULEMENT DE PNEU COMPRENANT DES PLOTS DE GOMME POURVUS D'ENCOCHE.**
LAUFFLÄCHE FÜR REIFEN MIT GUMMIBLÖCKEN MIT KERBEN
TREAD FOR TYRE INCLUDING GUM BLOCKS WITH NOTCHES

(30) Priorité: 27.09.2007 FR 0706858
(43) Date de publication de la demande: 07.07.2010
(73) Titulaire: Société de Technologie MICHELIN, 63000 Clermont-Ferrand (FR); MICHELIN Recherche et Technique S.A., 1763 Granges-Paccot (CH)
(72) Inventeur: DE BENEDITTIS, Eric, Greenville, South Carolina 29615 (US); LHOSPITALIER, Sylvie, F-63720 Ennezat (FR); SLACHMUYLDERS, Eric, F-63100 Clermont-Ferrand (FR); YEM, Pierre, F-63000 Clermont-Ferrand (FR)
(74) Mandataire: Diernaz, Christian
(86) Numéro de dépôt international: PCT/EP2008/063030
(87) Numéro de publication internationale: WO 2009/040441

(56) Documents cités:
- EP-A- 0 255 815
- JP-A- 1 101 205
- JP-A- 1 285 409
- JP-A- 5 131 812
- JP-A- 7 172 111
- JP-A- 8 258 515
- US-A- 2 100 084

## Description

L'invention concerne les bandes de roulement pour pneumatique et en particulier une sculpture pour de telles bandes comportant une nouvelle géométrie d'incision conférant auxdites bandes une amélioration des performances en adhérence sur sol revêtu d'eau sans pour autant diminuer la durée de vie sur usure.

L'invention concerne les bandes de roulement destinées à la fabrication de pneumatiques neufs ou au rechapage de pneumatiques, et en particulier les sculptures pour lesdites bandes comportant un grand nombre de découpures se présentant sous la forme de rainures et/ou d'incisions. Par incision, on entend, dans la présente description, une découpure de largeur inférieure ou égale à 2 mm, tandis qu'une rainure est une découpure de largeur supérieure à 2 mm.

Il est connu, par exemple dans les brevets US-A-2100084, US-A-2339558, EPB0664230 de réaliser des incisions dont la trace sur la surface de roulement de la bande de roulement est de forme circulaire fermée permettant d'avoir des arêtes actives dans toutes les directions tangentes à la surface de roulement. Chacune de ces incisions délimite et isole un plot de gomme (dont la section transversale a des dimensions relativement petites devant la largeur de la bande de roulement) uniquement relié à la bande par sa base, c'est-à-dire la partie du plot la plus éloignée de la surface de roulement. Ce plot de gomme est comprimé lors du contact avec le sol et en outre soumis à des forces agissant tangentiellement à la surface de contact avec le sol pendant le roulage, ces dernières forces ayant tendance à le déformer à la fois en cisaillement et en flexion.

Ces déformations du plot se traduisent par des pertes hystérétiques qui conduisent à une résistance au roulement augmentée et par des usures irrégulières. Par usure irrégulière, on entend ici des usures qui ne sont pas uniformes sur toute la surface de roulement, c'est-à-dire des usures qui sont localement plus fortes que sur l'ensemble de la bande. Le document JP-A-01285409 décrit les caractéristiques techniques du préambule de la revendication 1.

Un des objectifs de l'invention est de proposer une bande de roulement pourvue d'un pluralité de plots de gomme délimités par des incisions et dont la résistance au roulement est améliorée par rapport aux bandes de roulement de l'état de la technique, sans pour autant diminuer la durée de vie sur usure. Par durée de vie d'une bande de roulement, il faut entendre la durée d'usage de ladite bande avant que l'usure n'atteigne le niveau des témoins d'usure impliquant un retrait de la bande pour remplacement ou pour rechapage.

L'objectif est atteint grâce à une bande de roulement pour pneumatique selon le préambule de la revendication 1, la bande de roulement étant caractérisée en ce que

les plots de gomme sont pourvus sur leur surface latérale d'au moins une encoche ayant une profondeur **S** mesurée perpendiculairement à la surface latérale du plot et une largeur **L** mesurée parallèlement à la face latérale du plot et dans la direction de la hauteur du plot, ladite au moins une encoche faisant au moins un tour complet autour de l'axe XX', c'est-à-dire sur au moins 360 degrés, et est positionnée entre 20% et 80% de la hauteur **H** du plot par rapport à la surface de roulement.

Les dimensions des encoches sont telles que leur profondeur **S** et leur largeur L sont au moins égales à la largeur e de l'incision.

Chaque incision est définie par l'espace délimité principalement entre deux parois principales en regard l'une de l'autre, lesdites parois étant perpendiculaires à ou obliques par rapport à la surface de roulement. Avantageusement, pour des bandes de roulement destinées à des véhicules poids lourd, la largeur d'une incision délimitant un plot de gomme est inférieure à 2 mm (préférentiellement comprise entre 0.05 mm et 2 mm).

Par direction moyenne **XX**' d'un plot de gomme délimité par une incision, on entend la direction reliant le barycentre géométrique de la base du plot, c'est-à-dire la partie du plot la plus à l'intérieur de la bande, au barycentre géométrique de la surface de contact du plot avec la chaussée (cette direction fait un angle de **90**° avec ladite surface quand la génératrice du plot de gomme est perpendiculaire à cette surface).

Une sculpture de bande de roulement, comportant des incisions délimitant des plots de gomme selon l'invention, présente l'avantage d'avoir une grande longueur d'arêtes actives dans le contact avec le sol et cela pour différents niveaux d'usure de ladite bande.

Une sculpture selon l'invention permet en outre un gain en résistance au roulement, c'est-à-dire qu'elle permet de limiter les pertes hystérétiques liées aux déformations cycliques des matériaux de la bande de roulement en localisant les déformations subies par les plots de gomme sur les parties situées entre les encoches et la surface de contact des plots. Ainsi, pour une même dimension de pneu, il est possible d'augmenter les longueurs d'arêtes afin d'améliorer les performances d'adhérence tout en limitant les déformations de la bande de roulement.

L'encoche réalisée sur chaque plot se comporte comme une sorte de point de pivot pour le plot, qui permet de découpler la partie du plot radialement à l'extérieur de l'encoche de la partie radialement à l'intérieur. De cette façon, on limite effectivement les mouvements de gomme transmis à la base du plot.

Préférentiellement, au moins une encoche est positionnée entre 20% et 80% de la hauteur H du plot et encore plus préférentiellement, entre 70% et 80% de la hauteur H (dans ce dernier cas, l'encoche est formée plus près de la base du plot que de la surface de roulement).

Avantageusement, la surface de contact du plot à l'état neuf est inférieure à la surface de la base du plot. Encore plus avantageusement, la surface de contact du plot augmente continûment à partir de la surface à l'état neuf jusqu'à la base du plot.

Afin de limiter les mouvements de la partie du plot entre l'encoche et la base, il est judicieux de prévoir au moins une liaison supplémentaire avec le reste de la bande de roulement, cette liaison supplémentaire étant réalisée par un pont de gomme reliant la paroi latérale du plot avec la paroi en vis-à-vis, ce pont de gomme étant localisé près de la base du plot et limité en hauteur au dessous de l'encoche la plus proche de la base du plot.

Il est avantageux de prévoir dans ce dernier cas la présence de quatre ponts de gomme répartis uniformément autour du plot.

Pour permettre une meilleure compréhension de l'invention et de ses avantages, il est maintenant décrit plusieurs variantes de réalisation de l'invention au moyen des figures suivantes :

La figure 1A montre en coupe une partie de bande de roulement comprenant une pluralité de plots selon une première variante de l'invention ;

La figure 1B représente la surface de roulement de la bande montrée à la figure 1a ;

La figure 2 montre une deuxième variante de plot selon l'invention ;

La figure 3 montre une troisième variante de plot selon l'invention selon laquelle l'encoche suit une portion d'hélice ;

La figure 4 montre une quatrième variante de plot selon l'invention ;

La figure 5 montre une cinquième variante de plot selon l'invention ;

La figure 6 montre une sixième variante de plot selon l'invention ;

La figure 7 montre une lame destinée à équiper un moule pour mouler une septième variante de plot selon l'invention ;

La figure 8 montre une partie d'une bande de roulement d'un pneu pour véhicule poids lourd comprenant une pluralité de plots de gomme selon l'invention.

Pour rendre aisée la lecture des figures et de la description, une même référence est employée dans les figures dès lors qu'elle désigne un même élément fonctionnel et/ou structurel.

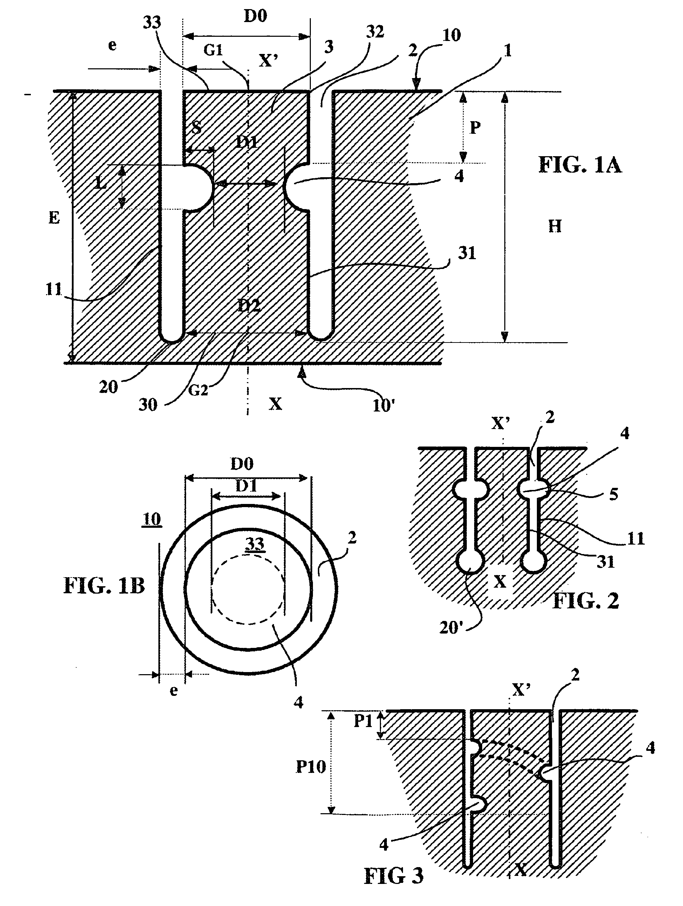

La figure **1A** montre en coupe une partie d'une bande de roulement 1 pour pneumatique, ladite bande 1 ayant une épaisseur E mesurée à l'état neuf comme la distance séparant la surface de roulement 10 destinée à venir en contact avec la chaussée pendant le roulage et une surface intérieure 10' destinée à être appliquée sur la surface radialement à l'extérieur d'une ébauche de pneumatique.

La bande 1 selon l'invention est pourvue d'une sculpture formée par des rainures et des incisions non montrées ici. Au moins certaines de ces incisions, sont des incisions 2 de forme cylindrique de profondeur H inférieure à l'épaisseur E de la bande 1 et délimitent et isolent des plots de gomme 3 de hauteur H du reste de la bande de roulement. Chaque plot de gomme 3 comprend une base 30 (partie la plus à l'intérieur de la bande) reliant ledit plot 3 à la bande 1 et présente un axe moyen XX' coupant la surface de roulement 10 de la bande. Cet axe moyen XX' est une droite fictive passant par les barycentres géométriques G1, G2 de la surface de contact 33 du plot 3 et de la base 30 dudit plot.

Chaque plot de gomme 3 comprend une paroi latérale 31 faisant le tour dudit plot autour de l'axe moyen XX' ; cette paroi latérale 31 coupe la surface de roulement selon une arête 32 dont le tracé géométrique sur la surface de roulement est fermé, cette arête 32 délimitant une surface de contact du plot 33 avec la chaussée. La paroi latérale 31 de chaque plot 3 est reliée à la base du plot 30 à une paroi en vis-à-vis 11 par un partie de raccordement 20. La paroi latérale 31 du plot 3 et la paroi en vis-à-vis 11 délimitent une incision 2 de largeur moyenne e égale à 0.5 mm. Le plot 3 a une géométrie de section transversale qui, dans le cas présenté, est circulaire ; on peut bien entendu envisager toute autre forme de section pour les plots.

En outre, le plot de gomme 3 est pourvu sur sa surface latérale 31 avec une encoche 4 ayant une profondeur S mesurée perpendiculairement à la surface latérale 31 du plot égale dans le cas présent à 0.5 mm et une largeur L mesurée parallèlement à la face latérale 31 du plot et dans la direction de la hauteur du plot, égale dans le cas présent à 1.0 mm. Vue dans le plan de la figure 1A, cette encoche est de section demi-circulaire (la profondeur S est égale à la moitié de la largeur L) et fait un tour complet du plot 3 autour de l'axe XX'. Dans le cas de cette première variante, l'encoche 4 est située à une distance P de la surface de roulement 10, cette distance étant constante en tout point autour du plot. Préférentiellement, cette distance est comprise entre 20% et 80% de la profondeur H de l'incision 2 délimitant le plot de gomme 3. La distance P est mesurée entre la surface de roulement 10 de la bande à l'état neuf et la plus proche arête formée par l'encoche 4 sur la surface latérale 31 du plot.

Sur la figure 1B, on montre une vue sur la surface de roulement du plot de gomme 3 de la figure 1A. On distingue la surface de contact 33 du plot de forme circulaire de diamètre D0 (égal ici à 8 mm) ainsi que l'incision 2 de forme circulaire et de largeur e. La section du plot 3 est réduite au niveau de l'encoche 4 à un diamètre D1 égal dans le cas présent à 7 mm.

Sur la figure 2, on montre une deuxième variante de plot 3 selon laquelle l'incision 2 délimitant ledit plot est terminée radialement à l'intérieur par une partie élargie 20' de largeur supérieure à la largeur e de l'incision. En outre, une deuxième encoche 5 est formée sur la paroi 11 de la bande de roulement en vis-à-vis de l'encoche 4 réalisée sur la face latérale 31 du plot de gomme 3. Ainsi, il est permis de modifier localement la rigidité de compression au voisinage de l'arête de la bande de roulement radialement à l'extérieur de cette deuxième encoche 5 et par là améliorer les conditions de fonctionnement en usure. Cette deuxième encoche 5 est, dans cette variante, formée à la même profondeur P que l'encoche formée sur le plot de gomme, mais elle pourrait être formée à une profondeur différente. De même, on pourrait prévoir un plus grand nombre d'encoches 5 sur la paroi 11 de la bande que sur la paroi latérale du plot.

Dans les variantes précédentes, les tracés géométriques, sur la surface de roulement 10 du pneumatique neuf, des incisions 2 délimitant des plots de gomme 3 ont une forme circulaire : bien entendu, ce qui a été décrit peut s'appliquer à la mise en oeuvre de formes différentes : ovale, rectangulaire ou autres.

Sur la figure 3, on montre une troisième variante de plot 3 selon laquelle la face latérale 31 du plot de gomme de forme cylindrique est pourvue d'une encoche 4 faisant le tour complet dudit plot et suivant un tracé en hélice autour de l'axe moyen XX'. Selon cette variante, l'encoche apparaît progressivement sur la surface de roulement avec l'usure de la bande de roulement à partir d'une première profondeur P1 pour se terminer à une profondeur maximale P10 ; ces deux profondeurs étant préférentiellement comprises entre 20% et 80% de la profondeur de l'incision 2 délimitant le plot 3.

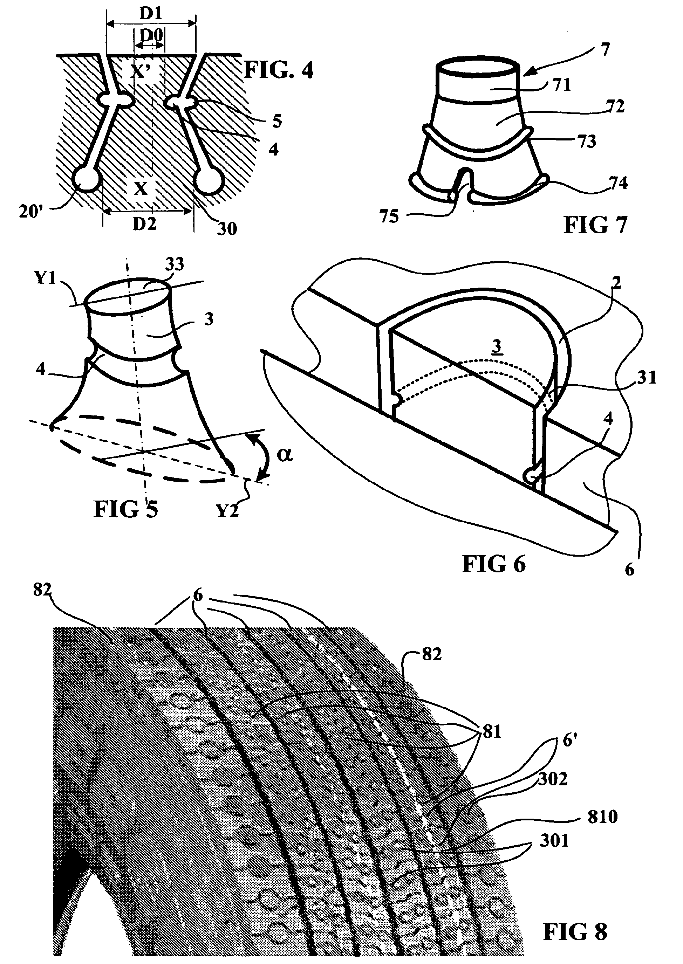

Sur la figure 4, on montre une quatrième variante de plot 3 selon laquelle l'aire de la surface de contact du plot décroît avec l'usure de la bande de roulement jusqu'à atteindre l'encoche 4 pour ensuite augmenter jusqu'à la base 30 dudit plot. Dans l'exemple présenté, l'encoche 4 fait complètement le tour du plot et est située à une profondeur P mesurée par rapport à la surface de contact du plot à l'état neuf. Au niveau de la surface de contact à l'état neuf le diamètre est D1 et passe ensuite à D0 au niveau de l'encoche pour fmalement prendre une valeur D2 à la base, ces trois diamètres suivant la relation D2>D1>D0 (D2 est plus grand que D1, ce dernier étant plus grand que DO).

La réduction de la surface de section du plot au niveau de l'encoche est ici de 20% de la surface de contact du plot à l'état neuf et ensuite la surface de la base du plot est augmentée de 20 % par rapport à la même surface de contact du plot à l'état neuf.

Cette construction permet d'augmenter la performance de la bande en motricité en augmentant la rigidité du plot à partir du moment où la partie sous l'encoche arrive sur la surface de roulement, tout en augmentant la longueur d'arête avec l'usure de la bande.

Sur la cinquième variante de plot 3 selon l'invention représentée à la figure 5, une encoche 4 entoure en totalité le plot dont la surface de contact 33 à l'état neuf est une ellipse ayant un grand axe principal Y1 et dont la surface de la base 30 du plot 3 est également une ellipse ayant un grand axe principal Y2. Selon cette variante, les axes principaux Y1 et Y2 des surfaces de contact à l'état neuf et de la surface de la base du plot ont des orientations différentes et présentent une différence angulaire alpha (α) préférentiellement d'au moins 45 degrés.

La figure 6 montre une sixième variante de l'invention selon laquelle un plot 3 est délimité en grande partie par une incision 2 et sur une moindre partie par une rainure 6. Dans cette variante, une encoche 3 est formée sur la paroi latérale 31 du plot 3 délimitant l'incision 2.

Sur la figure 7, on a représenté un élément de moulage 7 destiné à équiper un moule pour mouler une bande de roulement. Cet élément de moulage 7 sert au moulage d'une forme d'incision selon l'invention et ainsi à isoler un plot de gomme dans la bande. Dans le cas montré, cet élément de moulage 7 comprend une première partie 71 cylindrique destinée à être fixée à un moule de bande de roulement, et une seconde partie 72 dans le prolongement de la première partie, cette seconde partie 72 étant formée par une lame ayant une épaisseur correspondant à la largeur de l'incision moulée avec cet élément de moulage. Dans le cas présenté, l'incision moulée est sensiblement de forme tronconique. Par ailleurs, l'élément de moulage 7 comprend sur sa seconde partie 72 et à son extrémité 74 la plus éloignée de la première partie 71 une sorte de bourrelet de largeur supérieure à l'épaisseur de la lame formant la seconde partie 72. À sensiblement mi hauteur de la seconde partie 72 de l'élément 7 un cordon 73 est formé de manière à faire saillie sur les faces intérieure et extérieure de cet élément, ce cordon 73 étant destiné à mouler une encoche sur le plot délimité par l'incision moulée par cet élément et une encoche sur la paroi en vis-à-vis.

En outre, une encoche 75 est formée au travers de la paroi de l'élément 7 et s'étend entre l'extrémité 74 de la lame destinée à être la plus à l'intérieur de la bande de roulement ; cette encoche 75 est destinée à mouler un pont de gomme entre la face latérale du plot moulé par l'élément et la paroi en vis-à-vis. Cette liaison locale entre les parois délimitant l'incision permet d'amplifier le phénomène de pivot recherché en bloquant davantage encore le plot au plus près de sa base, c'est-à-dire entre ladite base et l'encoche la plus proche de ladite base. Dans cet exemple, l'encoche sur le plot la plus proche de la base du plot est moulée par le cordon 73.

La figure 8 montre une partie d'une bande de roulement d'un pneu pour poids lourd pourvue de cinq rainures 6 d'orientation circonférentielle délimitant quatre nervures intermédiaires 81. Deux nervures bord 82 sont formées axialement de part et d'autre des nervures intermédiaires 81. Chaque nervure intermédiaire 81 comprend une pluralité d'incisions transversales 6' délimitant des parties de nervures 810 ; sur chaque partie de nervure 810 sont formés deux plots 301 dont les éléments de moulage correspondent à l'élément montré avec la figure 7. Ces deux plots 301 sont décalés l'un par rapport à l'autre dans la direction circonférentielle.

Par ailleurs, la nervure bord 82 comprend une pluralité de plots 302 de forme identique à celle des plots 301 des nervures intermédiaires ; ces plots 302 ont des diamètres 2.5 fois plus grands que ceux des plots 301 des nervures intermédiaires 81.

Ainsi, il est possible d'obtenir une très grande longueur d'arêtes venant en contact avec la chaussée tout en limitant la perte de rigidité et en améliorant le fonctionnement mécanique des plots de gomme dans le contact avec la chaussée.

L'invention n'est pas limitée aux exemples décrits et représentés et diverses modifications peuvent y être apportées sans sortir de son cadre. Par exemple et bien que tous les exemples présentés montrent des plots de gomme dont la surface de contact à l'état neuf est au même niveau que la surface de roulement de la bande, il est aisé d'appliquer le même enseignement avec un plot de gomme dont la surface de contact est décalée par rapport à la surface de la bande de roulement (ceci signifie que cette surface de contact peut être en creux ou en relief par rapport à 1a surface de roulement).

## Revendications

1. Bande de roulement (1) pour pneumatique ayant une épaisseur et pourvue d'une surface de roulement (10) destinée à venir en contact avec la chaussée pendant le roulage, cette bande de roulement (1) comportant une pluralité de plots de gomme (3) d'axe moyen XX' coupant la surface de roulement (10) de la bande, chaque plot de gomme (3), ayant une hauteur au plus égale à l'épaisseur de la bande, comprenant une paroi latérale (31) faisant le tour dudit plot autour de l'axe XX', cette paroi latérale (31) coupant la surface de roulement (10) selon une arête (32) dont le tracé géométrique sur la surface de roulement (10) est fermé, cette arête (32) délimitant une surface de contact (33) du plot avec la chaussée, la paroi latérale (31) de chaque plot étant reliée à sa base (30) à l'intérieur de la bande à une paroi (11) en vis-à-vis, la paroi latérale (31) du plot et la paroi (11) en vis-à-vis délimitant une incision (2) de largeur moyenne (e), la bande étant **caractérisée en ce que** les plots de gomme (3) sont pourvus sur leur surface latérale (31) d'au moins une encoche (4) ayant une profondeur (S) mesurée perpendiculairement à la surface latérale (31) du plot et une largeur (L) mesurée parallèlement à la face latérale du plot, ladite au moins une encoche (4) faisant entièrement le tour du plot autour de l'axe XX', c'est-à-dire au moins sur 360 degrés, et ladite au moins une encoche (4) étant positionnée entre 20% et 80% de la hauteur H du plot.

2. Bande de roulement selon la revendication 1 **caractérisée en ce qu'**au moins une encoche (4) est enroulée suivant une partie d'hélice autour de l'axe XX'.

3. Bande de roulement selon la revendication 1 **caractérisée en ce qu'**une encoche (4) fait entièrement le tour du plot et est située à une distance (P) de la surface de contact (33) du plot entre 70% et 80% de la hauteur H du plot.

4. Bande de roulement selon l'une des revendications 1 à 3 **caractérisée en ce que** les dimensions de chaque encoche (4) sont telles que leur profondeur dans le plot et leur largeur sont, chacune, au moins égale à la largeur moyenne de l'incision (2) délimitant ledit plot (3).

5. Bande de roulement selon l'une des revendications 1 à 4 **caractérisée en ce que** la surface de contact (10) du plot à l'état neuf est inférieure à la surface de la base (30) du plot.

6. Bande de roulement selon la revendication 5 **caractérisée en ce que** la surface de contact du plot augmente continûment à partir de la surface à l'état neuf jusqu'à la base du plot.

7. Bande de roulement selon l'une des revendications 1 à 6 **caractérisée en ce que** le plot comprend en outre au moins une liaison supplémentaire avec le reste de la bande de roulement, cette liaison supplémentaire étant réalisée par un pont de gomme reliant la paroi latérale du plot avec la paroi en vis-à-vis, ce pont de gomme étant localisé près de la base du plot et limité en hauteur au dessous de l'encoche la plus proche de la base du plot.

8. Bande de roulement selon la revendication 7 **caractérisée en ce que** chaque plot comprend quatre ponts de gomme répartis uniformément autour du plot.

9. Bande de roulement selon l'une des revendications 1 à 8 **caractérisée en ce que** le tracé géométriques de l'arête (32) délimitant la surface de contact (33) du plot à l'état neuf est une ellipse ayant un grand axe et **en ce que** le contour de la base du plot a également la forme d'une ellipse ayant un grand axe dont l'orientation est différente de celle du grand axe de l'ellipse de la surface de contact à l'état neuf.

10. Bande de roulement selon l'une des revendications 1 à 9 **caractérisée en ce que** la paroi (11) en vis-à-vis de la paroi latérale (31) d'un plot de gomme comprend une encoche (5) située en vis-à-vis de l'encoche (4) sur la paroi latérale (31) dudit plot.

## Claims

1. Tread (1) for a tyre having a thickness and provided with a running surface (10) intended to come into contact with the roadway when running, this tread (1) comprising a plurality of rubber blocks (3) of mean axis XX' intersecting the running surface (10) of the tread, each rubber block (3), having a height at least equal to the thickness of the tread, comprising a side wall (31) that makes a full circuit of the said block about the axis XX', this side wall (31) intersecting the running surface (10) at an edge (32) of which the geometric outline on the running surface (10) is closed, this edge (32) delimiting a contact surface (33) via which the block makes contact with the roadway, the side wall (31) of each block being connected, at its base (30) inside the tread, to a wall (11) opposite, the side wall (31) of the block and the wall (11) opposite delimiting an incision (2) of mean width (e), the tread being **characterized in that**:
the rubber blocks (3) are provided on their lateral surface (31) with at least one notch (4) having a depth measured perpendicular to the lateral surface (31) of the block and a width measured parallel to the lateral face of the block, the said at least one notch (4) making a full circuit of the block about the axis XX', that is to say at least over 360 degrees, and the said at least one notch (4) being positioned between 20% and 80% of the height H of the block.

2. Tread according to Claim 1, **characterized in that** at least one notch (4) is wound in part of a helix around the axis XX'.

3. Tread according to Claim 1, **characterized in that** one notch (4) makes a full circuit of the block and is situated a distance (P) from the contact surface (33) of the block that is between 70% and 80% of the height H of the block.

4. Tread according to one of Claims 1 to 3, **characterized in that** the dimensions of each notch (4) are such that their depth into the block and their width are each at least equal to the mean width of the incision (2) delimiting the said block (3).

5. Tread according to one of Claims 1 to 4, **characterized in that** the area of the contact surface (10) of the block as new is less than the area of the base (30) of the block.

6. Tread according to Claim 5, **characterized in that** the area of the contact surface increases continuously from the surface in the as-new state to the base of the block.

7. Tread according to one of Claims 1 to 6, **characterized in that** the block further comprises at least one additional connection with the rest of the tread, this additional connection being afforded by a bridge of rubber connecting the side wall of the block to the wall opposite, this bridge of rubber being located very close to the base of the block and limited in height to below the notch closest to the base of the block.

8. Tread according to Claim 7, **characterized in that** each block comprises four bridges of rubber uniformly distributed about the block.

9. Tread according to one of Claims 1 to 8, **characterized in that** the geometric outline of the edge (32) delimiting the contact surface (33) of the as-new block is an ellipse having a major axis and **in that** the contour of the base of the block is also in the shape of an ellipse having a major axis oriented differently from the major axis of the ellipse of the as-new contact surface.

10. Tread according to one of Claims 1 to 9, **characterized in that** the wall (11) opposite the side wall (31) of a rubber block has a notch (5) situated opposite the notch (4) on the side wall (31) of the said block.

## Patentansprüche

1. Laufstreifen (1) für einen Luftreifen, der eine Dicke hat und mit einer Lauffläche (10) versehen ist, die dazu bestimmt ist, während des Fahrens mit der Straße in Kontakt zu kommen, wobei dieser Laufstreifen (1) mehrere Gummiblöcke (3) mit einer Mittelachse XX' aufweist, die die Lauffläche (10) des Streifens schneidet, wobei jeder Gummiblock (3), der eine Höhe höchstens gleich der Dicke des Streifens hat, eine Seitenwand (31) enthält, die um die Achse XX' um den Block herum verläuft, wobei diese Seitenwand (31) die Lauffläche (10) gemäß einer Kante (32) schneidet, deren geometrischer Verlauf auf der Lauffläche (10) geschlossen ist, wobei diese Kante (32) eine Kontaktfläche (33) des Blocks mit der Straße begrenzt, wobei die Seitenwand (31) jedes Blocks an ihrer Basis (30) im Inneren des Streifens mit einer gegenüberliegenden Wand (11) verbunden ist, wobei die Seitenwand (31) des Blocks und die gegenüberliegende Wand (11) einen Einschnitt (2) mittlerer Breite (e) definieren, wobei der Streifen **dadurch gekennzeichnet ist, dass**:
die Gummiblöcke (3) an ihrer Seitenfläche (31) mit mindestens einer Kerbe (4) versehen sind, die eine Tiefe (S) gemessen lotrecht zur Seitenfläche (31) des Blocks und eine Breite (L) gemessen parallel zur Seitenfläche des Blocks hat, wobei die mindestens eine Kerbe (4) um die Achse XX' ganz um den Block herum verläuft, d.h. mindestens über 360 Grad, und die mindestens eine Kerbe (4) auf zwischen 20% und 80% der Höhe H des Blocks positioniert ist.

2. Laufstreifen nach Anspruch 1, **dadurch gekennzeichnet, dass** mindestens eine Kerbe (4) gemäß einem Schraubenlinienbereich um die Achse XX' gewickelt ist.

3. Laufstreifen nach Anspruch 1, **dadurch gekennzeichnet, dass** eine Kerbe (4) den Block ganz umrundet und sich in einem Abstand (P) von der Kontaktfläche (33) des Blocks auf zwischen 70% und 80% der Höhe H des Blocks befindet.

4. Laufstreifen nach einem der Ansprüche 1 bis 3, **dadurch gekennzeichnet, dass** die Abmessungen jeder Kerbe (4) so sind, dass ihre Tiefe im Block und ihre Breite jeweils mindestens gleich der mittleren Breite des Einschnitts (2) sind, der den Block (3) begrenzt.

5. Laufstreifen nach einem der Ansprüche 1 bis 4, **dadurch gekennzeichnet, dass** die Kontaktfläche (10) des Blocks im Neuzustand geringer als die Fläche der Basis (30) des Blocks ist.

6. Laufstreifen nach Anspruch 5, **dadurch gekennzeichnet, dass** die Kontaktfläche des Blocks ausgehend von der Fläche im Neuzustand bis zur Basis des Blocks kontinuierlich zunimmt.

7. Laufstreifen nach einem der Ansprüche 1 bis 6, **dadurch gekennzeichnet, dass** der Block außerdem mindestens eine zusätzliche Verbindung mit dem Rest des Laufstreifens enthält, wobei diese zusätzliche Verbindung durch eine Gummibrücke hergestellt wird, die die Seitenwand des Blocks mit der gegenüberliegenden Wand verbindet, wobei diese Gummibrücke sich nahe der Basis des Blocks befindet und in der Höhe unter der Kerbe begrenzt ist, die der Basis des Blocks am nächsten ist.

8. Laufstreifen nach Anspruch 7, **dadurch gekennzeichnet, dass** jeder Block vier Gummibrücken enthält, die gleichmäßig um den Block herum verteilt sind.

9. Laufstreifen nach einem der Ansprüche 1 bis 8, **dadurch gekennzeichnet, dass** der geometrische Verlauf der Kante (32), die die Kontaktfläche (33) des Blocks im Neuzustand begrenzt, eine Ellipse mit einer großen Achse ist, und dass der Umriss der Basis des Blocks ebenfalls die Form einer Ellipse mit einer großen Achse hat, deren Ausrichtung sich von derjenigen der großen Achse der Ellipse der Kontaktfläche im Neuzustand unterscheidet.

10. Laufstreifen nach einem der Ansprüche 1 bis 9, **dadurch gekennzeichnet, dass** die der Seitenwand (31) eines Gummiblocks gegenüberliegende Wand (11) eine Kerbe (5) enthält, die sich gegenüber der Kerbe (4) auf der Seitenwand (31) des Blocks befindet.
